(19) Europäisches Patentamt / European Patent Office / Office européen des brevets

(11) **EP 3 138 176 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **14728115.8**

(22) Anmeldetag: **22.05.2014**

(51) Int Cl.:
*H02J 3/18* (2006.01)        *H02M 7/483* (2007.01)
*H02M 7/49* (2007.01)

(86) Internationale Anmeldenummer:
**PCT/EP2014/060566**

(87) Internationale Veröffentlichungsnummer:
**WO 2015/176760 (26.11.2015 Gazette 2015/47)**

(54) **UMRICHTER ZUR SYMMETRISCHEN BLINDLEISTUNGSKOMPENSATION SOWIE VERFAHREN ZU DESSEN REGELUNG**

CONVERTER FOR SYMMETRICAL REACTIVE POWER COMPENSATION, AND A METHOD FOR CONTROLLING SAME

CONVERTISSEUR SERVANT À LA COMPENSATION SYMÉTRIQUE D'ÉNERGIE RÉACTIVE ET PROCÉDÉ PERMETTANT LE RÉGLAGE DUDIT CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.03.2017 Patentblatt 2017/10**

(73) Patentinhaber: **Siemens Energy Global GmbH & Co. KG**
**81739 München (DE)**

(72) Erfinder:
• **DOMMASCHK, Mike**
  **91096 Möhrendorf (DE)**
• **PIESCHEL, Martin**
  **90473 Nürnberg (DE)**

(56) Entgegenhaltungen:
WO-A1-2010/145689        DE-A1-102011 086 545
US-A- 5 642 275          US-A1- 2012 170 338
US-A1- 2012 170 338

• **MARZOUGHI A ET AL: "A new control strategy for cascaded H-bridge multilevel converter to operate as a D-STATCOM", ENVIRONMENT AND ELECTRICAL ENGINEERING (EEEIC), 2012 11TH INTERNATIONAL CONFERENCE ON, IEEE, 18. Mai 2012 (2012-05-18), Seiten 122-127, XP032189622, DOI: 10.1109/EEEIC.2012.6221558 ISBN: 978-1-4577-1830-4**
• **HEINZ W VAN DER BROECK ET AL: "A Comparative Investigation of a Three-Phase Induction Machine Drive with a Component Minimized Voltage-Fed Inverter under Different Control Options", IEEE TRANSACTIONS ON INDUSTRY APPLICATIONS, IEEE SERVICE CENTER, PISCATAWAY, NJ, US, Bd. 43, Nr. 2, 1. März 1984 (1984-03-01), Seiten 309-320, XP011213340, ISSN: 0093-9994**

EP 3 138 176 B1

**Beschreibung**

Die Erfindung betrifft einen Umrichter zur symmetrischen Blindleistungskompensation sowie ein Regelungsverfahren für einen solchen Umrichter.

Umrichter dieser Art sind aus dem Stand der Technik bekannt. Beispielsweise zeigt die Druckschrift US 8 207 712 B2 einen Umrichter mit drei Phasenzweigen, die in einer Sternpunktschaltung miteinander verbunden sind. Die drei Phasenzweige sind über Koppelinduktivitäten mit ihnen zugeordneten Phasen eines dreiphasigen Wechselspannungsnetzes verbunden. Jeder Phasenzweig weist ein Phasenmodul mit einer Reihenschaltung von zweipoligen Submodulen auf, wobei die Submodule als sogenannte Vollbrückenschaltungen ausgebildet sind. Jedes Submodul umfasst demnach zwei Reihenschaltungen von Leistungshalbleiterschalteinheiten, wobei jede Leistungshalbleiterschalteinheit einen ausschaltbaren Leistungshalbleiter sowie eine dazu antiparallele Diode umfasst. Ferner weist jedes Submodul einen Energiespeicher in Form eines Kondensators auf. Jedes Submodul kann derart angesteuert werden, dass an dessen Polen eine Spannung abfällt, die entweder der Spannung des Kondensators, der Spannung des Kondensators jedoch mit umgekehrter Polarität oder einer Nullspannung, also einer Spannung mit dem Wert Null, entspricht. Damit kann mittels geeigneter Ansteuerung der Submodule eine stufenförmige Wechselspannung an den Phasenmodulen des Umrichters erzeugt werden. Die Stufenhöhe entspricht dabei der Kondensatorspannung. Ferner umfasst der bekannte Umrichter eine Regelungseinrichtung zur Regelung der Ströme in den Phasenzweigen des Umrichters, so dass eine gewünschte induktive Blindleistung im Wechselspannungsnetz bereitgestellt werden kann.

Der bekannte Umrichter ist insbesondere auch zur symmetrischen Blindleistungskompensation geeignet. Die symmetrische Blindleistungskompensation kompensiert eine Blindleistung, die bei einer symmetrischen Belastung aller Phasen im Wechselspannungsnetz auftritt (im Gegensatz dazu weisen bei einer unsymmetrischen Belastung die Ströme in den Phasen des Wechselspannungsnetzes unterschiedliche Amplituden und unterschiedliche Phasenverschiebungswinkel zueinander auf).

Die DE 10 2011 086 545 A1 offenbart eine Energiespeichereinrichtung mit einem Umrichter mit drei zu einem geerdeten Sternpunkt verbundenen Phasenzweigen, wobei zwei der Phasenzweige jeweils eine Reihenschaltung von Submodulen und einer der Phasenzweige submodulfrei ist.

Eine weitere Blindleistungskompensationsanlage ist aus der US 5 642 275 bekannt.

Aus der US 2012/0170338 A1 ist ein Umrichter zur Blindleistungskompensation bekannt, in dessen drittem Phasenzweig eine Modulreihenschaltung durch eine Kapazität ersetzt ist.

Allerdings ist der bekannte Umrichter in Herstellung und Betrieb technisch relativ aufwändig und kostenintensiv.

Die Aufgabe der Erfindung ist es, einen Umrichter zur symmetrischen Blindleistungskompensation vorzuschlagen, der einfach aufgebaut und relativ kostengünstig ist.

Die Aufgabe wird erfindungsgemäß durch einen Umrichter mit einem ersten, einem zweiten und einem dritten Phasenzweig gelöst, wobei jeder der drei Phasenzweige mit einer ihm zugeordneten Phase eines dreiphasigen Wechselspannungsnetzes verbindbar ist und die drei Phasenzweige in einer isolierten Sternpunktschaltung miteinander verbunden sind, wobei der erste Phasenzweig submodulfrei ist und der zweite und der dritte Phasenzweig jeweils ein Phasenmodul mit einer Reihenschaltung zweipoliger Submodule umfassen, wobei jedes Submodul einen Energiespeicher sowie wenigstens einen Leistungshalbleiter aufweist und derart ansteuerbar ist, dass an den Polen des Submoduls eine positive Submodulspannung, eine negative Submodulspannung oder eine Spannung mit dem Wert Null abfällt, wobei der Umrichter ferner eine Regelungseinrichtung zur Regelung von Phasenmodulströmen umfasst, wobei mittels der Regelungseinrichtung an jedem Phasenmodul einzustellende Spannungen bestimmbar sind und die Regelungseinrichtung eine Entkopplungseinheit umfasst, die zur Berechnung von Korrekturspannungen für jedes Phasenmodul in Abhängigkeit von einer ersten Anschlussspannung zwischen dem ersten und dem zweiten Phasenzweig, einer zweiten Anschlussspannung zwischen dem zweiten und dem dritten Phasenzweig sowie einer ersten und/oder einer zweiten jeweils aus Sollströmen und den Phasenmodulströmen des zweiten beziehungsweise des dritten Phasenzweiges abgeleiteten Stellspannung eingerichtet ist, so dass die einzustellenden Spannungen aus den Stellspannungen und den Korrekturspannungen ableitbar sind.

Gemäß der Erfindung sind lediglich in zwei der drei Phasenzweige Phasenmodule vorgesehen. Auf diese Weise vereinfacht sich der Aufbau des Umrichters, was dessen Herstellungs- und Betriebskosten senkt. Darüber hinaus kann, aufgrund der Verringerung der Gesamtanzahl der verwendeten Submodule, der Aufwand zur Ansteuerung der Submodule verringert werden.

Die Phasenzweige des Umrichters sind in einer isolierten Sternschaltung miteinander verbunden. Das bedeutet, dass die Phasenzweige in einem Sternpunkt zusammengeführt sind, der nicht auf ein vorbestimmtes Potenzial, beispielsweise das Erdpotenzial, gebracht ist. Daraus folgt insbesondere, dass die Ströme in den drei Phasenzweigen des Umrichters nicht unabhängig voneinander regelbar sind. Die Entkopplungseinheit dient dazu, diese Abhängigkeit als eine Korrektur der Stellspannung zu berechnen, wobei die Korrekturspannung von den Anschlussspannungen zwischen Anschlusspunkten des Umrichters an das Wechselspannungsnetz sowie den Stellspannungen, die aus der Regelung der Phasenmodulströme folgen, abhängt.

Bevorzugt sind die Submodule als Vollbrückenschaltungen ausgebildet, wobei die Leistungshalbleiterschalter der Submodule beispielsweise Bipolartransistoren mit isolierter Gate-Elektrode (IGBT) oder Metall-Oxid-Halbleiter-Feldeffekttransistoren (MOSFET) sind. In diesem Zusammenhang sind jedoch auch Submodule denkbar, die einen von einer Vollbrücke abweichenden Aufbau haben. Insbesondere sind Submodule verwendbar, an deren Polen mehrere positive und/oder mehrere negative Spannungswerte der Submodulspannung durch geeignete Ansteuerung einstellbar sind, zum Beispiel ein erster und ein zweiter positiver und/oder ein erster und ein zweiter negativer Spannungswert. Beispiele für derartige Submodule sind in dem Beitrag "Novel DC-AC Converter Topology for Multilevel Battery Energy Storage Systems" von M. Gommeringer et.al., PCIM Europe 2013, beschrieben. Die an dem Phasenmodul abfallende Spannung entspricht der Summe der an den Submodulen eingestellten Submodulspannungen.

Vorzugsweise sind die Energiespeicher der Submodule Speicherkondensatoren, besonders bevorzugt Hochleistungs-Speicherkondensatoren, um die hohen Anforderungen der Hochspannungsanwendung besser zu erfüllen.

Gemäß einer vorteilhaften Ausführungsform der Erfindung weist die Regelungseinrichtung ferner eine an die Entkopplungseinheit angeschlossene Steuereinheit zur Ansteuerung der Submodule mittels Pulsweitenmodulation (PWM) auf. Als Steuerverfahren kann jedes geeignete PWM-Verfahren oder auch das aus der Druckschrift WO 2008/086760 A1 bekannte Verfahren verwendet werden. Die Steuereinheit kann in Form von so genannten Modul-Management-Systemen (MMS) ausgeführt sein, wobei jedem der beiden Phasenmodule ein MMS zugeordnet ist.

Gemäß einer weiteren vorteilhaften Ausführungsform der Erfindung sind die Phasenmodule im zweiten und dritten Phasenzweig jeweils über eine Koppelinduktivität mit den zugeordneten Phasen des Wechselspannungsnetzes verbunden. Die beiden Koppelinduktivitäten sind vorzugsweise im Wesentlichen gleich. Der dritte Phasenzweig kann beispielsweise ohne eine Koppelinduktivität mit der zugeordneten Phase des Wechselspannungsnetzes verbunden sein. In diesem Fall lässt sich der Rechenaufwand der Entkopplungseinheit vorteilhaft reduzieren. Beispielsweise können die einzustellenden Spannungen Uconv2, Uconv3 für das Phasenmodul des zweiten beziehungsweise dritten Phasenzweiges in folgender Weise durch eine Korrektur der entsprechenden Stellspannungen Ustell2, Ustell3 berechnet werden:

$$Uconv2 = -Ustell2 + U21,$$

$$Uconv3 = -Ustell3 + U32 + U21,$$

wobei

- U21 die Anschlussspannung zwischen einem Anschlusspunkt des zweiten Phasenzweiges an die zugeordnete Phase des Wechselspannungsnetzes und einem Anschlusspunkt des ersten Phasenzweiges an die zugeordnete Phase des Wechselspannungsnetzes ist und
- U32 die Anschlussspannung zwischen einem Anschlusspunkt des dritten Phasenzweiges an die zugeordnete Phase des Wechselspannungsnetzes und einem Anschlusspunkt des zweiten Phasenzweiges an die zugeordnete Phase des Wechselspannungsnetzes ist.

Gemäß einer alternativen Ausführungsform der Erfindung weisen alle drei Phasenzweige jeweils eine Koppelinduktivität auf, die vorzugsweise alle denselben Induktivitätswert haben. Die in der Entkopplungseinheit durchzuführende Operation lautet in diesem Fall geeigneterweise:

$$Uconv2 = -Ustell3 - 2*Ustell2 + U21,$$

$$Uconv3 = -2*Ustell3 - Ustell2 + U32 + U21.$$

Es ist selbstverständlich ebenfalls denkbar, andere Kombinationen der Koppelinduktivitäten in den Phasenzweigen mit anderen Induktivitätswerten zu wählen. Dabei sind die Rechenvorschriften für die Entkopplungseinheit für die jeweilige Konfiguration aus den üblichen, dem Fachmann bekannten Gleichungen für Systemspannungen und Systemströme herzuleiten. Auch können die Phasenzweige direkt, also ohne Verwendung von Anschlusstransformatoren mit dem Wechselspannungsnetz verbunden sein.

Es kann von Vorteil sein, wenn der Umrichter Messvorrichtungen wie Spannungs- und/oder Stromwandler zur Erfassung der Phasenmodulströme und der Anschlußspannungen umfasst. Beispielsweise können die Stromwandler in einem oder mehreren der Phasenzweige angeordnet sein. Ferner können auch kapazitive Spannungswandler vorgesehen sein, um die Anschlussspannungen zu messen.

Gemäß einer weiteren vorteilhaften Ausführungsform der Erfindung umfasst die Regelungseinrichtung ferner den Phasenmodulen zugeordnete Signalverarbeitungseinheiten mit jeweils einem Mittelwertbildner, einem Differenzbildner, einem Spannungsregler, einem Frequenzbildner sowie einem Addierer. Dabei gilt für jede der Signalverarbeitungseinheiten, dass der Mittelwertbildner dazu eingerichtet ist, einen Mittelwert der Energiespeicherspannungen des zugeordneten Phasenmoduls zu bilden, der Differenzbildner eingangsseitig mit einem Ausgang des Mittelwertbildners verbunden und dazu eingerichtet ist, eine Regeldifferenz aus dem Mittelwert der Energiespeicherspannungen und einem vorgegebenen Gleichspannungssollwert zu bilden, der Spannungsregler eingangsseitig mit einem Ausgang des Differenzbildners verbunden und dazu eingerichtet ist, aus der Regeldifferenz einen Wirk-Sollstromwert zu bilden, der Frequenzbildner eingangsseitig mit einem Ausgang des Spannungsreglers verbunden und dazu eingerichtet ist, aus dem Wirk-Sollstromwert einen Wirk-Sollstrom als einen Wechselstrom mit einem gegebenen Phasenwinkel zu bilden und der Addierer eingangsseitig mit einem Ausgang des Frequenzbildners verbunden und dazu eingerichtet ist, aus dem Wirk-Sollstrom und einem vorgegebenen Blind-Sollstrom den Sollstrom für das zugeordnete Phasenmodul zu bilden.

Demnach setzt sich der (Wechsel-)Sollstrom für jedes Phasenmodul aus zwei Anteilen zusammen: dem Wirk- und dem Blind-Sollstrom. Dabei dient die Aufnahme einer Wirkleistung durch den Umrichter zum Ausgleich eines unerwünschten Spannungsabfalls in den Energiespeichern der Submodule. Der Spannungsregler kann beispielsweise ein geeigneter linearer Regler sein.

Vorzugsweise sind die Signalverarbeitungseinheiten Teil einer digitalen Datenverarbeitungsanlage. Sind die einzelnen Energiespeicher der Submodule unterschiedlich ausgebildet, so können die Energiespeicherspannungen auch mit zugeordneten unterschiedlichen Gleichspannungssollwerten verglichen werden, um die Energieaufnahme zu regeln. Es ist ebenfalls denkbar, die einfache Mittelwertbildung in dem Mittelwertbildner durch eine entsprechend an die verwendeten Submodule angepasste Berechnung, beispielsweise eine gewichtete Mittelwertbildung, zu ersetzen. Der Frequenzbildner erzeugt aus dem konstanten oder sich in der Zeit langsam änderndem vorgegebenem Gleichspannungssollwert eine Wechsel-stromgröße, deren Phasenwinkel gleich dem Phasenwinkel der Spannung im Wechselspannungsnetz ist. Geeigneterweise steht der Ausgang der Signalverarbeitungseinheiten jeweils mit dem Eingang eines Stromreglers des zugeordneten Phasenmoduls in Verbindung.

Eine weitere Aufgabe der Erfindung ist es, ein Regelungsverfahren für einen zuvor beschriebenen Umrichter bereitzustellen, das möglichst einfach und zuverlässig ist.

Die Aufgabe wird durch ein Verfahren gelöst, bei dem mittels Stromreglern eine erste Stellspannung für das Phasenmodul des zweiten Phasenzweiges aus einem vorgegebenen ersten Sollstrom und einem im zweiten Phasenzweig gemessenen Phasenmodulstrom und eine zweite Stellspannung für das Phasenmodul des dritten Phasenzweiges aus einem vorgegebenen zweiten Sollstrom und einem im dritten Phasenzweig gemessenen Phasenmodulstrom gewonnen werden, wobei eine am Phasenmodul des zweiten Phasenzweiges einzustellende Spannung in Abhängigkeit von der ersten Stellspannung und einer ersten Korrekturspannung und eine am Phasenmodul des dritten Phasenzweiges einzustellende Spannung in Abhängigkeit von der zweiten Stellspannung und einer zweiten Korrekturspannung berechnet werden, wobei die erste und die zweite Korrekturspannung jeweils in Abhängigkeit von einer ersten Anschlussspannung zwischen dem ersten und dem zweiten Phasenzweig, einer zweiten Anschlussspannung zwischen dem zweiten und dem dritten Phasenzweig sowie der ersten und/oder der zweiten Stellspannung berechnet werden. Aufgrund dessen, dass die Stellspannungen um die Korrekturspannungen ergänzt werden, können die Ströme in den Phasenzweigen voneinander entkoppelt werden, wodurch erst eine zuverlässige Bereitstellung der symmetrischen Blindleistung im Wechselspannungsnetz möglich wird.

Vorzugsweise werden die an den Phasenmodulen einzustellenden Spannungen mittels Pulsweitenmodulation in Steuersignale zur Ansteuerung der zugeordneten Submodule umgewandelt. Dabei kann bevorzugt das aus der Druckschrift WO 2008/086760 A1 bekannte Verfahren verwendet werden, wodurch die Energie in den Energiespeichern der Submodule im Wesentlichen auf gleichem Niveau gehalten werden kann.

Gemäß einer bevorzugten Ausführungsform des Verfahrens werden der erste und der zweite Sollstrom jeweils aus einem Wirk-Sollstrom und einem Blind-Sollstrom zusammengesetzt, wobei die Wirk-Sollströme in Abhängigkeit von einem Mittelwert der an den Submodulen abfallenden Spannungen der Phasenmodule des zweiten beziehungsweise dritten Phasenzweiges und einem vorgegebenen Gleichspannungssollwert bestimmt werden. Der Wirk-Sollstrom hat dabei die Funktion, die Spannung an den Phasenmodulen derart zu regeln, dass zum Ausgleich von Energieverlusten in den Energiespeichern der Submodule entsprechend Wirkleistung dem Wechselspannungsnetz entnommen wird.

Die Erfindung wird im Folgenden anhand der in den Figuren 1 bis 4 dargestellten Ausführungsbeispiele näher erläutert.

FIGUR 1 zeigt ein erstes Ausführungsbeispiel eines erfindungsgemäßen Umrichters in schematischer Darstellung.

FIGUR 2 zeigt ein Ausführungsbeispiel eines Submoduls des Umrichters in schematischer Darstellung.

FIGUR 3 zeigt in Form eines Blockschaltbildes eine Regelungseinrichtung für den Umrichter der Figur 1.

FIGUR 4 zeigt ein zweites Ausführungsbeispiel des erfindungsgemäßen Umrichters in schematischer Darstellung.

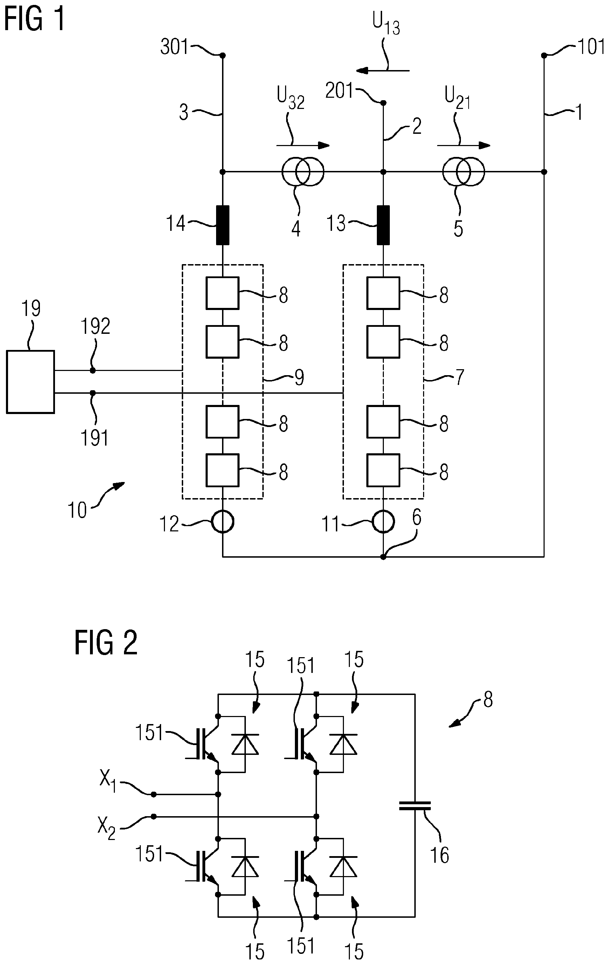

Im Einzelnen ist in Figur 1 ein Ausführungsbeispiel eines erfindungsgemäßen Umrichters 10 zur symmetrischen Blindleistungskompensation in einer schematischen Darstellung gezeigt. Der Umrichter 10 weist drei Phasenzweige 1,2,3. Ein erster Phasenzweig 1 ist über einen Anschlusspunkt 101 an eine erste ihm zugeordnete Phase eines Wechselspannungsnetzes angeschlossen. Das Wechselspannungsnetz selbst ist in Figur 1 grafisch nicht dargestellt. Ein zweiter Phasenzweig 2 ist über einen Anschlusspunkt 201 mit einer ihm zugeordneten zweiten Phase des Wechselspannungsnetzes verbunden. Ein Phasenzweig 3 ist über einen Anschlusspunkt 301 mit einer dritten, ihm zugeordneten Phase des Wechselspannungsnetzes verbunden. Zwischen den Anschlusspunkten 101, 201, 301 fallen Anschlussspannungen ab, die in Figur 1 als Pfeile dargestellt sind, die mit den Bezeichnungen U21, U13 sowie U32 gekennzeichnet sind. Die Spannung U32 sowie die Spannung U21 werden mittels der Spannungswandler 4 beziehungsweise 5 gemessen.

Der Umrichter 10 ist mittels geeigneter, hier nicht dargestellter Schalter, mit dem Wechselspannungsnetz trennbar verbunden.

Die Phasenzweige 1, 2 und 3 sind in einer Sternschaltung miteinander verbunden. Der Sternpunkt 6 der Sternpunktschaltung ist isoliert ausgeführt. Das bedeutet, dass der Sternpunkt 6 nicht auf einem festen, definierten Potential liegt.

Der zweite Phasenzweig 2 weist ein Phasenmodul 7 auf, das eine Reihenschaltung von zweipoligen Submodulen 8 umfasst. Der dritte Phasenzweig 3 weist ein Phasenmodul 9, das eine Reihenschaltung von Submodulen 8 umfasst. Die Reihenschaltungen umfassen im gezeigten Beispiel jeweils N Submodule 8, wobei die Anzahl der Submodule sich nach der Spannung richtet, die im Phasenmodul aufzubringen sind. In dem Ausführungsbeispiel des Umrichters 1 aus Figur 1 sind alle Submodule 8 gleich aufgebaut. Ein Strom durch das Phasenmodul 7 wird mittels eines Strommessers 11 gemessen. Ein Strom durch das Phasenmodul 9 wird mittels eines entsprechenden Strommessers 12 gemessen. Das Phasenmodul 7 des zweiten Phasenzweigs 2 ist über eine Koppelinduktivität 13 mit der zugeordneten Phase des Wechselspannungsnetzes verbunden. Das Phasenmodul 9 des dritten Phasenzweigs 3 ist mittels einer Koppelinduktivität 14 mit der dem dritten Phasenzweig 3 zugeordneten Phase des Wechselspannungsnetzes verbunden. Im in Figur 1 gezeigten Ausführungsbeispiel sind die Phasenzweige 1, 2, 3 ohne einen Anschlusstransformator mit dem Wechselspannungsnetz verbunden.

Der Umrichter 10 weist ferner eine hier nur schematisch dargestellte Regelungseinrichtung 19 auf, die mittels Steuerausgänge 191 und Steuerausgänge 192 zum Regeln der Phasenmodulströme eingerichtet ist.

In Figur 2 wird auf den Aufbau der Submodule 8 näher eingegangen. Das Submodul 8 ist als Zweipol ausgebildet, wobei die beiden Pole des Submoduls 8 in Figur 2 mit X1 und X2 gekennzeichnet sind. Das Submodul 8 der Figur 2 ist als eine sogenannte Vollbrückenschaltung oder H-Brückenschaltung ausgebildet. Es weist zwei Reihenschaltungen von Leistungshalbleiterschalteinheiten 15 auf, die jeweils aus einer Parallelschaltung eines ausschaltbaren Leistungshalbleiterschalters und einer ihm antiparallel geschalteten Diode bestehen. Ferner umfasst das Submodul 8 einen Energiespeicher 16, der im in Figur 2 dargestellten Ausführungsbeispiel als ein Speicherkondensator ausgebildet ist. Dabei ist der Speicherkondensator in einer Parallelschaltung zu den beiden Reihenschaltungen mit den Leistungshalbleiterschalteinheiten 15 geschaltet. Durch geeignete Ansteuerung der Submodule über die Steuerausgänge 191, 192 der Regelungseinrichtung 19, die in Figur 2 nicht dargestellt ist, können die Submodule 8 jeweils derart angesteuert werden, dass an den beiden Klemmen X1 beziehungsweise X2 der Submodule eine Submodulspannung abfällt, die gleich der am Kondensator 16 abfallenden Spannung, der Spannung am Kondensator 16 jedoch mit umgekehrter Polarität oder einer Spannung mit dem Wert Null gleich ist. Dadurch kann in einem zeitlichen Ablauf an jedem der Phasenmodule 7, 9 ein Spannungsverlauf erzeugt werden, der einer gestuften Wechselspannung entspricht.

Es ist zu beachten, dass im Ausführungsbeispiel der Figuren 1 und 2 die Ströme durch die zweiten und dritten Phasenzweige 2 und 3 unabhängig voneinander geregelt werden können, jedoch der Strom durch den ersten Phasenzweig 1 von den beiden Strömen durch die Phasenzweige 2 und 3 abhängt. Dies ist bei der Regelung des Umrichters 10 zu berücksichtigen.

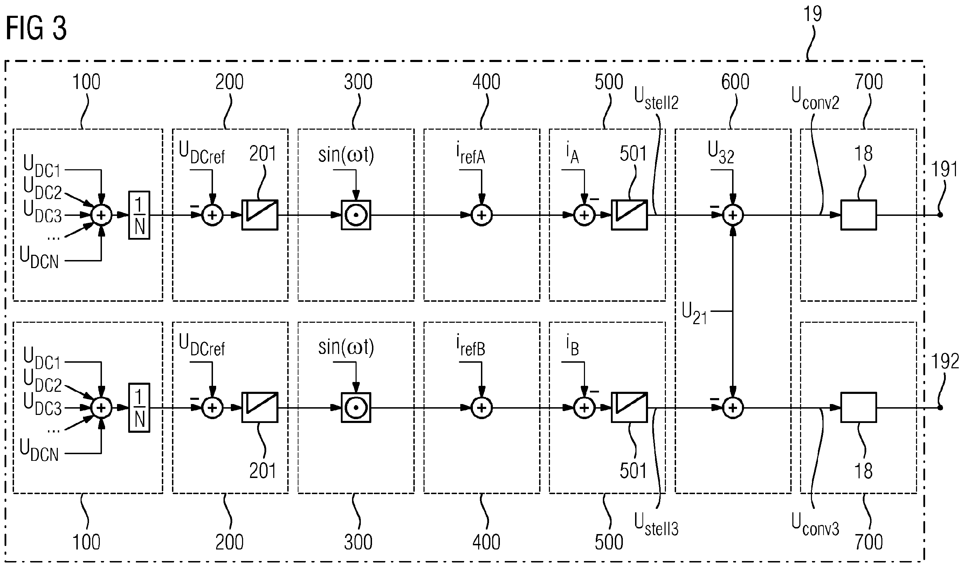

Figur 3 zeigt im Detail den Aufbau eines Ausführungsbeispiels der Regelungseinrichtung 19 des Umrichters aus dem Ausführungsbeispiel der Figuren 1 und 2. Zum besseren Verständnis des Aufbaus sind die einzelnen Komponenten der Regelungseinrichtung in Form von Blöcken 100 bis 700 gegliedert Die in den Blöcken 100 bis 500 ablaufenden Regelungsschritte finden parallel für die beiden Phasenmodule des zweiten bzw. des dritten Phasenzweiges statt. Im Folgenden werden diese Regelungsschritte zur Vermeidung von Wiederholungen nur für das Phasenmodul des zweiten Phasenzweiges im Detail beschrieben. In einem Mittelwertbildner 100 werden die Spannungen UDC1 bis UDCN der Energiespeicher 16 der Submodule 8 des Phasenmoduls 7 addiert und ein Mittelwert dieser Spannungen gebildet. In einem Differenzbildner 200 wird die Differenz zwischen dem Mittelwert der im Block 100 ermittelten Spannungen mit einem Gleichspannungssollwert UDCREF verglichen und an einen Spannungsregler gegeben, der am Ausgang des Differenzbildners 200 einen Wirk-Sollstromwert liefert. In einem Frequenzbildner 300 wird der ermittelte Wirk-Sollstromwert zu einer Wechselstromgröße umgewandelt, indem aus dem Wirk-Sollstromwert der Wirk-Sollstrom erzeugt wird. Der Wirk-Sollstrom ist eine Wechselstromgröße, deren Phase der Phase der Netzspannung im Wechselspannungsnetz entspricht. Mittels eines Addierers 400 wird ein vorgegebener Blind-Sollstrom irefA für das Phasenmodul 7 zu dem Wirk-Sollstrom hinzuaddiert. In einer Einheit 500 wird der aus dem Wirk-Sollstrom und dem Blind-Sollstrom berechnete Sollstrom mit einem mittels des Strommessers 11 gemessener Phasenmodulstrom iA unter Bildung eines Stromregelfehlers verglichen und an einen Stromregler 501 gegeben, der an seinem Ausgang eine Stellspannung Ustell2 für das Phasenmodul 7 berechnet.

Eine entsprechende Anordnung von Blöcken 100, 200, 300, 400 und 500 ist in Bezug auf das Phasenmodul 9 vorgesehen, wobei sich der vorgegebene Blind-Sollstrom irefB von dem Blind-Sollstrom irefA im Allgemeinen unterscheidet. In einer Entkopplungseinheit 600 werden nun Korrekturspannungen für die Stellspannungen Ustell2, Ustell3 bestimmt. Für das Phasenmodul 7 werden dabei im Block 600 zur Stellspannung Ustell2 die Spannung U21 sowie die Spannung U32 hinzuaddiert. Die auf diese Weise berechnete einzustellende Spannung Uconv2 am Phasenmodul 7 wird an eine Modulmanagementeinheit (MMS) 18 im Block 700 weitergegeben, die dementsprechend an ihren die Ausgänge der Regelungseinrichtung 19 bildenden Ausgängen 191 diese einzustellende Spannung in Steuersignale für die einzelnen Submodule 8 des Phasenmoduls 7 bereitstellt.

Für das dritte Phasenmodul 9 berechnet die Entkopplungseinheit 600 die Korrekturspannung, indem sie zu der Stellspannung Ustell3 die Spannung U21 hinzuaddiert. Die Summe aus der Stellspannung Ustell3 und der Korrekturspannung wird von der Entkopplungseinheit 600 an eine Modulmanagementeinheit 18 für das Phasenmodul 9 weitergegeben. Die Modulmanagementeinheit 18 für das Phasenmodul 9 wandelt die einzustellende Spannung Uconv3 in Steuersignale für die Submodule 8 des Phasenmoduls 9 um und stellt sie am Ausgang 192 bereit.

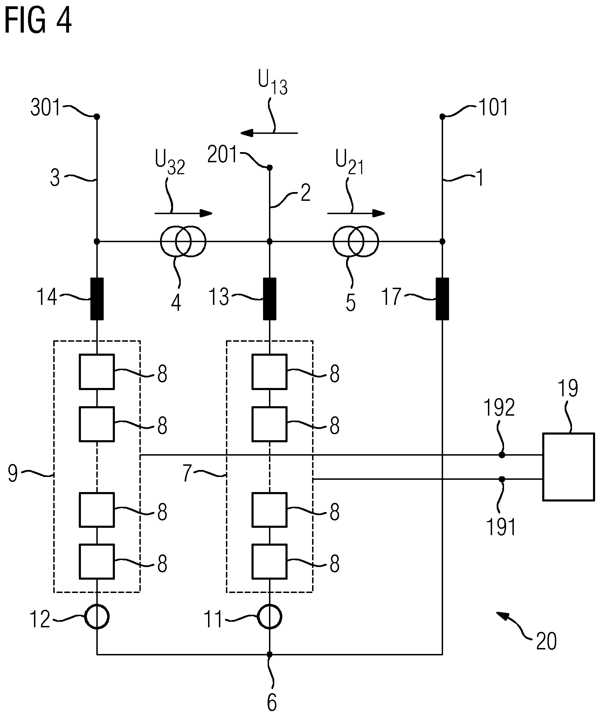

In Figur 4 ist ein zweites Ausführungsbeispiel eines erfindungsgemäßen Umrichters 20 dargestellt. In den Figuren 1 und 4 sind gleiche oder gleichartige Teile mit gleichen Bezugszeichen versehen. Zur Vermeidung von Wiederholungen wird in der Beschreibung der Figur 4 lediglich auf die Unterschiede zwischen den Ausführungsformen der Figuren 1 und 4 eingegangen. Auch sind die Submodule 8 des Umrichters 20 gleich aufgebaut und entsprechen den Submodulen 8 der Figur 2.

Im Unterschied zu dem Umrichter 10 des Ausführungsbeispiels der Figur 1 weist der Umrichter 20 im Ausführungsbeispiel der Figur 4 im ersten Phasenzweig 1 eine Koppelinduktivität 17 auf. Die Koppelinduktivität 17 weist die gleichen induktiven Eigenschaften wie die Koppelinduktivitäten 14 und 13. Entsprechend diesem Unterschied muss die Regelungseinrichtung 19 bze. das Regelungsverfahren für den Umrichter 20 angepasst werden. Die Blöcke 100, 200, 300, 400, 500 sowie 700 der Regelungseinrichtung der Figur 3 sind unverändert. In der Entkopplungseinheit 600 für den Umrichter 20 ist jedoch die Korrekturspannung für die jeweilige Stellspannung Ustell2 bzw. Ustell3 für das Phasenmodul 7 beziehungsweise 9 anders zu berechnen als beim Umrichter 10 des Ausführungsbeispiels der Figur 1. Die entsprechenden Formel seien im Folgenden widergegeben:

```
Ustell2 wird korrigiert zu 2 * Ustell2 + Ustell3 - U21;


Ustell3 wird korrigiert zu 2 * Ustell3 + Ustell2 - U32 - U21.
```

Bezugszeichenliste

| | |
|---|---|
| 1,2,3 | Phasenzweig |
| 101,201,301 | Anschlusspunkt |
| 10 | Umrichter |
| 4,5 | Spannungswandler |
| 6 | Sternpunkt |
| 7,9 | Phasenmodul |
| 8 | Submodul |
| 11,12 | Strommesser |
| 13,14,17 | Koppelinduktivität |
| 15 | Leistungshalbleiterschalteinheit |
| 16 | Energiespeicher |
| 18 | Modulmanagementsystem |

| 151 | Leistungshalbleiter |
|---|---|
| 19 | Regelungseinrichtung |
| 191,192 | Steuerausgang |
| 100 | Mittelwertbildner |
| 200 | Differenzbildner |
| 300 | Frequenzbildner |
| 400 | Addierer |
| 501 | Stromregler |
| 600 | Entkopplungseinheit |
| 700 | Modulmanagementeinheit |
| U13,U21,U32 | Anschlussspannungen |
| X1,X2 | Anschluss des Submoduls |
| UDC1...UDCN | Energiespeicherspannung |
| UDCREF | Gleichspannungssollwert |
| Ustell2 | Stellspannung |
| Ustell3 | Stellspannung |
| Uconv2 | einzustellende Spannung |
| Uconv3 | einzustellende Spannung |
| irefA,irefB | Blind-Sollstrom |
| iA,iB | Phasenmodulstrom |

**Patentansprüche**

1. Umrichter (10,20) zur symmetrischen Blindleistungskompensation mit einem ersten, einem zweiten und einem dritten Phasenzweig (1,2,3), wobei

   jeder der drei Phasenzweige (1,2,3) mit einer ihm zugeordneten Phase eines dreiphasigen Wechselspannungsnetzes verbindbar ist und die drei Phasenzweige (1,2,3) in einer isolierten Sternpunktschaltung miteinander verbunden sind, wobei
   der erste Phasenzweig (1) submodulfrei ist und der zweite und der dritte Phasenzweig (2,3) jeweils ein Phasenmodul (7,9) mit einer Reihenschaltung zweipoliger Submodule (8) umfassen, wobei
   jedes Submodul (8) einen Energiespeicher (16) sowie wenigstens einen Leistungshalbleiter (151) aufweist und derart ansteuerbar ist, dass an den Polen des Submoduls (8) wenigstens eine positive Submodulspannung, wenigstens eine negative Submodulspannung oder eine Spannung mit dem Wert Null abfällt, wobei
   der Umrichter (10,20) ferner eine Regelungseinrichtung (19) zur Regelung von Phasenmodulströmen umfasst, wobei mittels der Regelungseinrichtung (19) an jedem Phasenmodul (7,9) einzustellende Spannungen (Uconv2, Uconv3) bestimmbar sind **dadurch gekennzeichnet, dass**
   die Regelungseinrichtung (19) eine Entkopplungseinheit (600) umfasst, die zur Berechnung von Korrekturspannungen für jedes Phasenmodul (7,9) in Abhängigkeit von

   - einer ersten Anschlussspannung (U21) zwischen dem ersten und dem zweiten Phasenzweig,
   - einer zweiten Anschlussspannung (U32) zwischen dem zweiten und dem dritten Phasenzweig sowie
   - einer ersten und/oder einer zweiten jeweils aus Sollströmen und den Phasenmodulströmen des zweiten beziehungsweise des dritten Phasenzweiges abgeleiteten Stellspannung (Ustell2, Ustell3) eingerichtet ist, so dass die einzustellenden Spannungen (Uconv2, Uconv3) aus den Stellspannungen (Ustell2, Ustell3) und den Korrekturspannungen ableitbar sind.

2. Umrichter (10,20) nach Anspruch 1, wobei die Submodule (8) als Vollbrückenschaltungen ausgebildet sind, wobei die Submodulspannung der Energiespeicherspannung des Energiespeichers entspricht.

3. Umrichter (10,20) nach einem der Ansprüche 1 oder 2, wobei die Energiespeicher (16) Speicherkondensatoren sind.

4. Umrichter (10,20) nach einem der vorangehenden Ansprüche, wobei die Regelungseinrichtung (19) ferner eine an die Entkopplungseinheit angeschlossene Steuereinheit (700) zur Ansteuerung der Submodule mittels Pulsweitenmodulation aufweist.

5. Umrichter (10,20) nach einem der vorangehenden Ansprüche, wobei
die Phasenmodule (8) im zweiten und dritten Phasenzweig (2,3) jeweils über eine Koppelinduktivität (13,14) mit den zugeordneten Phasen des Wechselspannungsnetzes verbunden sind.

6. Umrichter (10,20) nach einem der vorangehenden Ansprüche, wobei
der erste Phasenzweig (1) eine Koppelinduktivität (17) aufweist.

7. Umrichter (10,20) nach einem der vorangehenden Ansprüche, wobei
der Umrichter (10,20) ferner Messvorrichtungen (4,5,11,12) zur Erfassung der Phasenmodulströme und der Anschlußspannungen umfasst.

8. Umrichter nach Anspruch 2, wobei die Regelungseinrichtung (19) ferner den Phasenmodulen zugeordnete Signalverarbeitungseinheiten mit jeweils einem Mittelwertbildner (100), einem Differenzbildner (200), einem Spannungsregler (201), einem Frequenzbildner (300) sowie einem Addierer (400) umfasst, wobei in jeder Signalverarbeitungseinheit

der Mittelwertbildner dazu eingerichtet ist, einen Mittelwert der Energiespeicherspannungen des zugeordneten Phasenmoduls zu bilden,
der Differenzbildner eingangsseitig mit einem Ausgang des Mittelwertbildners verbunden und dazu eingerichtet ist, eine Regeldifferenz aus dem Mittelwert der Energiespeicherspannungen und einem vorgegebenen Gleichspannungssollwert zu bilden,
der Spannungsregler eingangsseitig mit einem Ausgang des Differenzbildners verbunden und dazu eingerichtet ist, aus der Regeldifferenz einen Wirk-Sollstromwert zu bilden,
der Frequenzbildner eingangsseitig mit einem Ausgang des Spannungsreglers verbunden und dazu eingerichtet ist, aus dem Wirk-Sollstromwert einen sinusförmigen Wirk-Sollstrom zu bilden und
der Addierer eingangsseitig mit einem Ausgang des Frequenzbildners verbunden und dazu eingerichtet ist, aus dem Wirk-Sollstrom und einem vorgegebenen Blind-Sollstrom den Sollstrom für das zugeordnete Phasenmodul zu bilden.

9. Regelungsverfahren für einen Umrichter (10,20) zur symmetrischen Blindleistungskompensation mit einem ersten, einem zweiten und einem dritten Phasenzweig (1,2,3), wobei

jeder der drei Phasenzweige (1,2,3) mit einer ihm zugeordneten Phase eines dreiphasigen Wechselspannungsnetzes verbindbar ist und die Phasenzweige (1,2,3) in einer isolierten Sternpunktschaltung miteinander verbunden sind,
der erste Phasenzweig (1) submodulfrei ist und der zweite und dritte Phasenzweig (2,3) jeweils ein Phasenmodul (7,9) mit einer Reihenschaltung zweipoliger Submodule (8) umfassen, wobei
jedes Submodul (8) einen Energiespeicher (16) sowie wenigstens einen Leistungshalbleiter (151) aufweist und derart ansteuerbar ist, dass an den Polen des Submoduls (8) wenigstens eine positive Submodulspannung, wenigstens eine negative Submodulspannung oder eine Spannung mit dem Wert Null abfällt,
bei dem mittels Stromreglern (501)
eine erste Stellspannung für das Phasenmodul (7) des zweiten Phasenzweiges (2) aus einem vorgegebenen ersten Sollstrom und einem im zweiten Phasenzweig (2) gemessenen Phasenmodulstrom und
eine zweite Stellspannung für das Phasenmodul (9) des dritten Phasenzweiges (3) aus einem vorgegebenen zweiten Sollstrom und einem im dritten Phasenzweig (3) gemessenen Phasenmodulstrom gewonnen werden, wobei
eine am Phasenmodul (7) des zweiten Phasenzweiges (2) einzustellende Spannung in Abhängigkeit von der ersten Stellspannung und einer ersten Korrekturspannung und
eine am Phasenmodul (9) des dritten Phasenzweiges (3) einzustellende Spannung in Abhängigkeit von der zweiten Stellspannung und einer zweiten Korrekturspannung berechnet werden,

wobei die erste und die zweite Korrekturspannung jeweils in Abhängigkeit von

- einer ersten Anschlussspannung U21 zwischen dem ersten und dem zweiten Phasenzweig (1,2),
- einer zweiten Anschlussspannung U32 zwischen dem zweiten und dem dritten Phasenzweig (2,3) sowie
- der ersten und/oder der zweiten Stellspannung berechnet werden.

10. Verfahren nach Anspruch 9, wobei die an den Phasenmodulen (7,9) einzustellenden Spannungen mittels Pulsweitenmodulation in Steuersignale zur Ansteuerung der zugeordneten Submodule umgewandelt werden.

11. Verfahren nach einem der Ansprüche 9 oder 10, wobei der erste und der zweite Sollstrom jeweils aus einem Wirk-Sollstrom und einem Blind-Sollstrom zusammengesetzt werden, wobei die Wirk-Sollströme in Abhängigkeit von einem Mittelwert der an den Submodulen (8) abfallenden Spannungen der Phasenmodule (7,9) des zweiten beziehungsweise dritten Phasenzweiges (2,3) und einem vorgegebenen Gleichspannungssollwert bestimmt werden.

**Claims**

1. Converter (10, 20) for symmetrical reactive power compensation having a first, a second and a third phase path (1, 2, 3), wherein
each of the three phase paths (1, 2, 3) is connectable to an associated phase of a three-phase AC power supply and the three phase paths (1, 2, 3) are connected to one another in an isolated star point circuit, wherein the first phase path (1) is submodule free and the second and third phase paths (2, 3) each comprise a phase module (7, 9) having a series circuit comprising two-pole submodules (8), wherein each submodule (8) has an energy store (16) and also at least one power semiconductor (151) and is actuatable such that the poles of the submodule (8) have at least one positive submodule voltage, at least one negative submodule voltage or a voltage having the value zero dropped across them, wherein the converter (10, 20) further comprises a feedback control device (19) for regulating phase module currents, wherein the feedback control device (19) can be used to determine voltages (Uconv2, Uconv3) that need to be set on each phase module (7, 9), **characterized in that** the feedback control device (19) comprises a decoupling unit (600) that is set up to compute correction voltages for each phase module (7, 9) on the basis of

   - a first supply voltage (U21) between the first and second phase paths,
   - a second supply voltage (U32) between the second and third phase paths and also
   - a first and/or a second control voltage (Ustell2, Ustell3), each derived from nominal currents and the phase module currents of the second and third phase paths, respectively,

so that the voltages (Uconv2, Uconv3) that are to be set are derivable from the control voltages (Ustell2, Ustell3) and the correction voltages.

2. Converter (10, 20) according to Claim 1, wherein the submodules (8) are in the form of full-bridge circuits, wherein the submodule voltage corresponds to the energy store voltage of the energy store.

3. Converter (10, 20) according to either of Claims 1 and 2, wherein
the energy stores (16) are storage capacitors.

4. Converter (10, 20) according to one of the preceding claims, wherein
the feedback control device (19) further has a control unit (700), connected to the decoupling unit, for actuating the submodules by means of pulse width modulation.

5. Converter (10, 20) according to one of the preceding claims, wherein
the phase modules (8) in the second and third phase paths (2, 3) are each connected to the associated phases of the AC power supply via a coupling inductance (13, 14).

6. Converter (10, 20) according to one of the preceding claims, wherein
the first phase path (1) has a coupling inductance (17).

7. Converter (10, 20) according to one of the preceding claims, wherein
the converter (10, 20) further comprises measuring apparatuses (4, 5, 11, 12) for recording the phase module currents and the supply voltages.

8. Converter according to Claim 2, wherein the feedback control device (19) further comprises signal processing units, associated with the phase modules, each having an averager (100), a subtractor (200), a voltage regulator (201), a frequency former (300) and an adder (400), wherein in each signal processing unit
the averager is set up to form an average of the energy store voltages of the associated phase module,
the subtractor has its input side connected to an output of the averager and is set up to form a control difference from the average of the energy store voltages and a prescribed DC voltage nominal value,

the voltage regulator has its input side connected to an output of the subtractor and is set up to form an active nominal current value from the control difference,

the frequency former has its input side connected to an output of the voltage regulator and is set up to form a sinusoidal active nominal current from the active nominal current value, and

the adder has its input side connected to an output of the frequency former and is set up to form the nominal current for the associated phase module from the active nominal current and a prescribed reactive nominal current.

9.  Feedback control method for a converter (10, 20) for symmetrical reactive power compensation having a first, a second and a third phase path (1, 2, 3), wherein

each of the three phase paths (1, 2, 3) is connectable to an associated phase of a three-phase AC power supply and the phase paths (1, 2, 3) are connected to one another in an isolated star point circuit,

the first phase path (1) is submodule free and the second and third phase paths (2, 3) each comprise a phase module (7, 9) having a series circuit comprising two-pole submodules (8), wherein

each submodule (8) has an energy store (16) and also at least one power semiconductor (151) and is actuatable such that the poles of the submodule (8) have at least one positive submodule voltage, at least one negative submodule voltage or a voltage having the value zero dropped across them,

in which current regulators (501) are used to obtain a first control voltage for the phase module (7) of the second phase path (2) from a prescribed first nominal current and a phase module current measured in the second phase path (2), and

a second control voltage for the phase module (9) of the third phase path (3) from a prescribed second nominal current and a phase module current measured in the third phase path (3), wherein

a voltage that is to be set on the phase module (7) of the second phase path (2) is computed on the basis of the first control voltage and a first correction voltage, and

a voltage that is to be set on the phase module (9) of the third phase path (3) is computed on the basis of the second control voltage and a second correction voltage,

wherein the first and second correction voltages are each computed on the basis of

- a first supply voltage U21 between the first and second phase paths (1, 2),
- a second supply voltage U32 between the second and third phase paths (2, 3) and
- the first and/or second control voltage.

10. Method according to Claim 9, wherein the voltages that are to be set on the phase modules (7, 9) are converted by means of pulse width modulation into control signals for actuating the associated submodules.

11. Method according to either of Claims 9 and 10, wherein the first and second nominal currents are each composed of an active nominal current and a reactive nominal current, the active nominal currents being determined on the basis of an average of the voltages of the phase modules (7, 9) of the second and third phase paths (2, 3) that are dropped across the submodules (8) and a prescribed DC voltage nominal value.

**Revendications**

1.  Convertisseur (10, 20) pour la compensation symétrique de la puissance réactive, comprenant une première, une deuxième et une troisième branche (1, 2, 3) de phase, dans lequel chacune des trois branches (1, 2, 3) de phase peut être reliée à une phase, qui lui est associée, d'un réseau de tension alternative triphasé et les trois branches (1, 2, 3) de phase sont reliées les unes aux autres en un circuit isolé à point neutre, dans lequel

la première branche (1) de phase est sans sous-module et la deuxième et la troisième branche (2, 3) de phase comprennent chacune un module (7, 9) de phase ayant un circuit série de deux sous-modules (8) bipolaires, dans lequel

chaque sous-module (8) a un accumulateur (16) d'énergie, ainsi qu'au moins un semi-conducteur (151) de puissance et peut être commandé de manière à ce qu'aux pôles du sous-module (8) chute au moins une tension de sous-module positive, au moins une tension de sous-module négative ou une tension de valeur nulle, dans lequel

le convertisseur (10, 20) comprend en outre un dispositif (19) de régulation pour la régulation de courants de module de phase, dans lequel, au moyen du dispositif (19) de régulation, il peut être déterminé des tensions (Uconv2, Uconv3) s'appliquant à chaque module (7, 9) de phase,

**caractérisé en ce que**

le dispositif (19) de régulation comprend une unité (600) de découplage, qui est conçue pour le calcul de tensions de correction pour chaque module (7, 9) de phase en fonction de

- une première tension (U21) aux bornes entre la première et la deuxième branche de phase,
- une deuxième tension (U32) aux bornes entre la deuxième et la troisième branche de phase, ainsi que
- une tension (Ustell2, Ustell3) de réglage déduite d'un premier et/ou d'un deuxième respectivement parmi des courants de consigne et des courants de module de phase de la deuxième ou respectivement de la troisième branche de phase, de manière à pouvoir déduire les tensions (Uconv2, Uconv3) à appliquer à partir des tensions (Ustell2, Ustell3) de réglage et des tensions de correction.

2. Convertisseur (10, 20) suivant la revendication 1, dans lequel les sous-modules (8) sont constitués sous la forme de circuits à pont complet, la tension de sous-module correspondant à la tension de l'accumulateur d'énergie.

3. Convertisseur (10, 20) suivant l'une des revendications 1 ou 2, dans lequel les accumulateurs (16) d'énergie sont des condensateurs d'accumulation.

4. Convertisseur (10, 20) suivant l'une des revendications précédentes, dans lequel le dispositif (19) de régulation a en outre une unité (700) de commande, connectée à l'unité de découplage, pour commander les sous-modules au moyen d'une modulation d'impulsions en durée.

5. Convertisseur (10, 20) suivant l'une des revendications précédentes, dans lequel les modules de phase dans la deuxième et la troisième branche (2, 3) de phase sont reliés respectivement par l'intermédiaire d'une inductance (13, 14) de couplage aux phases associées du réseau de tension alternative.

6. Convertisseur (10, 20) suivant l'une des revendications précédentes, dans lequel la première branche (1) de phase a une inductance (17) de couplage.

7. Convertisseur (10, 20) suivant l'une des revendications précédentes, dans lequel le convertisseur (10, 20) comprend en outre des systèmes (4, 5, 11, 12) de mesure pour le relevé des courants de module de phase et des tensions aux bornes.

8. Convertisseur suivant la revendication 2, dans lequel le dispositif (19) de régulation comprend en outre des unités de traitement du signal associées aux modules de phase et ayant chacune un formeur (100) de valeur moyenne, un formeur (200) de différence, un régleur (201) de tension, un formeur (300) de fréquence, ainsi qu'un additionneur (400), dans lequel dans chaque unité de traitement du signal,
le formeur de valeur moyenne est conçu pour former une valeur moyenne des tensions d'accumulateur d'énergie du module de phase associé,
le formeur de différence est relié du côté de l'entrée à une sortie du formeur de valeur moyenne et est conçu pour former une différence de réglage à partir de la valeur moyenne des tensions d'accumulateur d'énergie et d'une valeur de consigne de tension continue donnée à l'avance,
le régleur de tension est relié du côté de l'entrée à une sortie du formeur de différence et est conçu pour former une valeur de courant de consigne actif,
le formeur de fréquence est relié du côté de l'entrée à une sortie du régleur de tension et est conçu pour former un courant de consigne actif sinusoïdal à partir de la valeur de courant de consigne actif et
l'additionneur est relié du côté de l'entrée à une sortie du formeur de fréquence et est conçu pour former le courant de consigne pour le module de phase associé à partir du courant de consigne actif et d'un courant de consigne réactif donné à l'avance.

9. Procédé de régulation d'un convertisseur (10, 20) pour la compensation symétrique de la puissance réactive, comprenant une première, une deuxième et une troisième branches (1, 2, 3) de phase, dans lequel
chacune des trois branches (1, 2, 3) de phase peut être reliée à une phase, qui lui est associée, d'un réseau de tension alternative triphasé et les branches (1, 2, 3) de phase sont reliées les unes aux autres en un circuit isolé à point neutre,
la première branche (1) de phase est sans sous-module et la deuxième et la troisième branche (2, 3) de phase comprennent chacune un module (7, 9) de phase ayant un circuit série de deux sous-modules (8) bipolaires, dans lequel
chaque sous-module (8) a un accumulateur (16) d'énergie, ainsi qu'au moins un semi-conducteur (151) de puissance et peut être commandé de manière à ce qu'aux pôles du sous-module (8) chute au moins une tension de sous-module positive, au moins une tension de sous-module négative ou une tension de valeur nulle,

dans lequel au moyen de régleur (501) de courant,

on obtient une première tension de réglage pour le module (7) de phase de la deuxième branche (2) de phase à partir d'un premier courant de consigne donnée à l'avance et d'un courant de module de phase mesuré dans la deuxième branche (2) de phase et

une deuxième tension de réglage pour le module (9) de phase de la troisième branche (3) de phase à partir d'un deuxième courant de consigne donnée à l'avance et d'un courant de module de phase mesuré dans la troisième branche (3) de phase, dans lequel on calcule

une tension s'appliquant au module (7) de phase de la deuxième branche (2) de phase en fonction de la tension de réglage et d'une première tension de correction et

une tension s'appliquant au module (9) de phase de la troisième branche (3) de phase en fonction de la deuxième tension de réglage et d'une deuxième tension de correction, dans lequel on calcule la première et la deuxième tension de correction respectivement en fonction

- d'une première tension U21 aux bornes entre la première et la deuxième branche (1, 2) de phase,
- d'une deuxième tension U32 aux bornes entre la deuxième et la troisième branche (2, 3) de phase, ainsi que
- de la première et/ou de la deuxième tension de réglage.

10. Procédé suivant la revendication 9, dans lequel on transforme les tensions s'appliquant aux modules (7, 9) de phase au moyen d'une modulation d'impulsions en durée en des signaux de commande pour commander les sous-modules associés.

11. Procédé suivant l'une des revendications 9 ou 10, dans lequel on compose le premier et le deuxième courant de consigne respectivement d'un courant de consigne actif et d'un courant de consigne réactif, les courants de consigne actifs étant déterminés en fonction d'une valeur moyenne des tensions, chutant aux sous-module (8), des modules (7, 9) de phase de la deuxième et respectivement de la troisième branche (2, 3) de phase et d'une valeur de consigne de tension continue donnée à l'avance.

# FIG 1

301

$U_{13}$

$U_{32}$

201

$U_{21}$

101

3

2

1

14

4

13

5

19

192

191

10

8
8

8
8

9

8
8

8
8

7

12

11

6

# FIG 2

15

151

15

151

8

$X_1$

$X_2$

16

151

151

15

151

15

FIG 3

# FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8207712 B2
- DE 102011086545 A1
- US 5642275 A
- US 20120170338 A1
- WO 2008086760 A1